Europäisches Patentamt

European Patent Office

Office européen des brevets

(19)

(11) Numéro de publication: **0 064 467**
**A1**

## (12) DEMANDE DE BREVET EUROPEEN

(21) Numéro de dépôt: **82400827.0**

(22) Date de dépôt: **05.05.82**

(51) Int. Cl.³: **B 27 B 13/06**
**B 23 D 55/08**

(30) Priorité: **06.05.81 FR 8109020**

(43) Date de publication de la demande:
**10.11.82 Bulletin 82/45**

(84) Etats contractants désignés:
**BE CH DE GB IT LI SE**

(71) Demandeur: **Durand, Pierre**
**29ter Croix de Fer**
**F-78100 Saint Germain en Laye(FR)**

(72) Inventeur: **Durand, Pierre**
**29ter Croix de Fer**
**F-78100 Saint Germain en Laye(FR)**

(74) Mandataire: **Thibon-Littaye, Annick**
**Cabinet A. THIBON-LITTAYE 11 rue de l'Etang**
**F-78160 Marly Le Roi(FR)**

(54) **Scie à ruban.**

(57) Scie à ruban comportant deux volants (2, 3) rotatifs à axes parallèles pour le guidage et l'entraînement d'un ruban (7) de coupe formant une boucle fermée autour des deux volants et des moyens (6) pour écarter élastiquement les volants l'un de l'autre et assurer ainsi une tension sur le ruban, caractérisée en ce que les volants comportent des rainures creusées à leur surface périphérique circulairement autour de l'axe de rotation et se disposant en quinconce d'un volant à l'autre.

Fig. 1

EP 0 064 467 A1

## Scie à ruban

L'invention concerne la conception des scies à ruban, et plus particulièrement la réalisation des volants qui guident et entraînent le ruban de coupe dans ce genre de scies.

Dans les scies à ruban utilisées dans les différentes industries pour le découpage de matières (bois, plastiques, tissus, viandes etc...) les rubans (dentés ou non dentés) sont soumis à des contraintes importantes en cours de travail. Ces contraintes tendent à déformer le ruban, notamment en faisant apparaître des défauts de planéité qui se traduisent par un sciage non rectiligne, parfois incompatible avec le résultat recherché.

L'invention permet de s'affranchir de ces inconvénients, en assurant notamment un effet de planage sur le ruban en permanence, pendant le fonctionnement de la scie, et ceci grâce à une conception spéciale des volants, permettant de créer dans le ruban des tensions locales momentanées, mais répétées.

Ainsi, l'invention a pour objet une scie à ruban comportant deux volants rotatifs à axes parallèles pour le guidage et l'entraînement d'un ruban de coupe formant une boucle fermée autour des deux volants, et des moyens pour écarter élastiquement les volants l'un de l'autre et assurer ainsi une tension d'ensemble sur le ruban , caractérisée en ce que l'un au moins des volants comporte des rainures creusées à sa surface périphérique autour de l'axe de rotation.

De telles rainures, en creux par rapport à la surface périphérique du volant, ou jante, permettent de

créer des contraintes dans le ruban qui sont des contraintes localisées, là où passe le ruban sur une rainure du volant, et qui se répètent à chaque tour du ruban.

Les rainures peuvent être réalisées de différentes manières. Elles sont formées avantageusement sur l'essentiel de la jante du volant couverte par le ruban à son passage. Dans un mode de réalisation particulièrement simple et souvent préféré, les rainures sont creusées circulairement autour de l'axe de rotation, selon des sections droites circulaires du volant. Mais cette solution n'est pas limitative. Une autre solution souvent avantageuse consiste à former les rainures par une ou plusieurs creusures hélicoïdales sur la jante.

Par ailleurs, selon une caractérisque secondaire de l'invention, on prévoit des rainures analogues sur les deux volants de la scie. Dans ce cas, il est en général souhaitable, notamment dans le cas de rainures circulaires, que les rainures soient décalées d'un volant à l'autre latéralement. En d'autres termes, elles se disposent en quinconce d'un volant à l'autre. Dans un cas particulier de réalisation, le décalage est de la moitié de la distance entre axes de deux rainures consécutives, c'est-à-dire à la moitié du pas dans le cas de rainures identiques équidistantes.

Suivant des caractéristiques secondaires, relatives à des modes de réalisation préférés de l'invention, mais cependant non limitatifs, chaque volant peut comporter un nombre de rainures circulaires compris entre 3 et 20, les rainures étant séparées les unes des autres par des bandes planes de la jante des volants, dont la largeur S est avantageusement en relation avec la largeur R d'une rainure de manière à respecter un rapport $\frac{R}{S}$ compris entre 1 et 4 environ. Par ailleurs si E désigne l'espacement entre deux rainures prises d'axe à axe, il est avantageux que le rapport $\frac{E}{e}$ soit compris entre 1 et 8 environ.

Les figures annexées montrent à titre d'exemple non limitatif une forme de réalisation de l'invention.

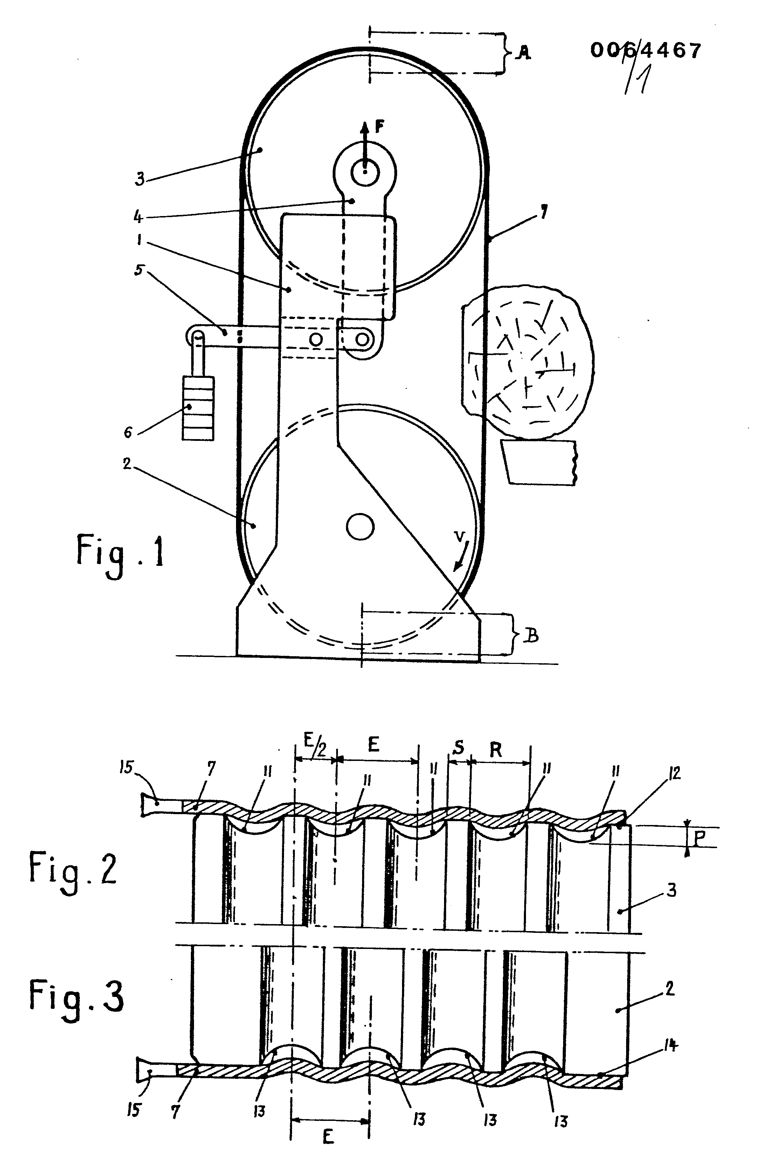

La figure 1 est une vue en élévation d'une scie à ruban avec son dispositif de tension de la lame. Les figures 2 et 3 sont des vues en coupe des volants et du ruban dans les détails A et B respectivement.

Dans la figure 1, un bâti 1 supporte le volant 2 entraîné par un moteur non représenté qui assure la rotation du ruban 7 dans le sens de la flèche V. Le volant 3 est supporté par le bras 4, coulissant dans le bâti 1. Les volants 2 et 3 sont constitués par deux cylindres de même diamètre, disposés en regard l'un de l'autre, avec leurs axes parallèles. Le ruban 7, dont un bord présente des dents 15, forme une boucle fermée autour des volants. Un levier 5, prenant appui sur le bâti, est accouplé au bras 4 d'une part et à un organe de tension élastique 6 d'autre part (contrepoids, ressort, cylindre hydraulique ou pneumatique). Le ruban 7 est donc soumis , pendant son travail, à une tension constante représentée par la flèche F, d'une valeur compatible avec la matière et la section du ruban utilisé.

L'épaisseur des rubans utilisés couramment est en général comprise entre 0,9 et 1,8mm, et leur largeur peut varier dans une très large gamme, par exemple entre 10 et 500 mm, et dans la pratique, on règle l'organe 6, qui exerce sur les volants 2 et 3 un effort tendant à les écarter élastiquement l'un de l'autre, de telle sorte que la tension du ruban soit comprise entre 10 et 20 kg/mm$^2$, et le plus souvent entre 12 et 15 kg/mm$^2$.

Sur la figure 2, on voit que le volant 3 est muni de rainures 11, identiques entre elles et équidistantes, au pas E, creusées circulairement autour de l'axe du volant à sa surface périphérique. La force de tension F, permanente en cours de sciage, provoque une légère déformation du ruban 7 en face de chaque rainure 11, formant ainsi dans le ruban une ondulation transversale pendant son passage sur le volant 3.

Sur la figure 3, on voit que le volant 2 est pourvu de rainures similaires, mais que celles-ci sont décalées par rapport aux rainures du volant 3. Dans le cas particulier représenté, le décalage est de la moitié du pas, soit E/2. Les ondulations transversales du ruban 7 se produisent donc en alternance avec celles du volant 3 : chaque creux interne de la figure 3 devient une bosse externe pendant son passage sur le volant 2.

Après chaque tour complet, le ruban 7 aura ainsi été soumis à une alternance de déformations autour d'une position moyenne médiane correspondant au plan moyen du ruban. Ces déformations alternatives ont pour effet de stabiliser en permanence les tensions internes dans la matière constituant le ruban 7 et de le maintenir ainsi dans un plan moyen médian stable pendant le travail.

La forme et les dimensions des rainures 11 et 13 peuvent varier dans une large mesure, ainsi que leur nombre et espacement, suivant l'épaisseur et le coefficient d'élasticité de la matière constituant le ruban. Si e est l'épaisseur du ruban, si S est la largeur d'une bande circulaire plane qui subsiste de la surface périphérique d'origine du volant

(12 ou 14), entre deux rainures consécutives de largeur R, distantes du pas E entre leurs axes respectifs, on peut considérer que $1 < \dfrac{E}{e} < 8$ et que $1 < \dfrac{R}{S} < 4$. la profondeur P des rainures est choisie pour être supérieure à la déformation maximale locale du ruban. Il n'y a en général pas d'inconvénient à lui donner une valeur quelconque comprise entre 0,3 et 3mm. Le décalage entre les rainures d'un volant à l'autre n'est pas toujours nécessairement de la moitié du pas, mais de préférence d'au moins E/10.

Les précisions qui précèdent sont données à titre indicatif. Elles ne sont pas plus limitatives que les détails de la réalisation décrite à titre d'exemple. On doit comprendre en particulier que la formation des rainures sur la jante est indépendante de la forme géométrique de base des surfaces 12 et 14, déjà utilisées de manière classique sur ces volants, qu'ils soient plats ou bombés.

REVENDICATIONS

1. Scie à ruban comportant deux volants rotatifs à axes parallèles pour le guidage et l'entraînement d'un ruban de coupe formant une boucle fermée autour des deux volants et des moyens pour écarter élastiquement les volants l'un de l'autre et assurer ainsi une tension sur le ruban, caractérisée en ce que chacun desdits volants comporte des rainures creusées à sa surface périphérique atour de l'axe de rotation et en ce que ces rainures sont décalées latéralement d'un volant à l'autre,en quinconce.

2. Scie à ruban selon la revendication 1, caractérisée en ce que les rainures sont circulaires, selon des sections droites de la jante du volant.

3. Scie à ruban selon la revendication 2, caractérisée en ce que les rainures sont identiques et équidistantes sur chaque volant.

4. Scie à ruban selon la revendication 3, caractérisée en ce que les rainures sont décalées d'un volant à l'autre de la moitié du pas entre deux rainures consécutives de chaque volant.

5. Scie à ruban selon la revendication 3, caractérisée en ce que le décalage entre les rainures d'un volant à l'autre est au moins égal au dixième du pas entre deux rainures consécutives.

Fig. 1

Fig. 2

Fig. 3

0064467

/1

**0064467**

Office europeen
des brevets

**RAPPORT DE RECHERCHE EUROPEENNE**

Numero de la demande

EP 82 40 0827

| | DOCUMENTS CONSIDERES COMME PERTINENTS | | |
|---|---|---|---|
| Categorie | Citation du document avec indication en cas de besoin des parties pertinentes | Revendication concernee | CLASSEMENT DE LA DEMANDE (Int Cl ³) |
| Y | FR - A - 2 450 149 (SOHNER) <br><br> * page 3, lignes 6-30; page 4, lignes 1-8 * <br><br> -- | 1,3 | B 27 B 13/06 <br> B 23 D 55/08 |
| Y | DE - A - 2 740 212 (AMADA) <br><br> * page 1; revendications 1,2; page 12, lignes 22-31; page 13, lignes 1-2 * <br><br> & FR - A - 2 364 084 <br><br> -- | 1,3 | |
| Y | US - A - 2 865 412 (CRANE) <br><br> * colonne 3, lignes 15-22 * <br><br> -- | 1,3 | DOMAINES TECHNIQUES RECHERCHES (Int Cl ³) |
| Y | CH - A - 9 024 (MUGGLI) <br><br> * page 1 * <br><br> ------ | 1 | B 27 B <br> B 23 D |

Le present rapport de recherche a ete etabli pour toutes les revendications

| Lieu de la recherche | Date d achevement de la recherche | Examinateur |
|---|---|---|
| LA HAYE | 14-07-1982 | VERDONCK |

CATEGORIE DES DOCUMENTS CITES

X particulierement pertinent a lui seul
Y particulierement pertinent en combinaison avec un autre document de la meme categorie
A arriere-plan technologique
O divulgation non-ecrite
P document intercalaire

T theorie ou principe à la base de l invention
E document de brevet anterieur, mais publie à la date de depot ou apres cette date
D cite dans la demande
L cite pour d autres raisons

& membre de la meme famille, document correspondant